Europäisches Patentamt

(19) European Patent Office

Office européen des brevets

(11) Publication number: **0 054 423**

**A1**

(12) **EUROPEAN PATENT APPLICATION**

(21) Application number: **81305856.7**

(22) Date of filing: **14.12.81**

(51) Int. Cl.³: **B 62 B 9/00**
**A 47 D 9/04**

(30) Priority: **12.12.80 GB 8039914**

(43) Date of publication of application:
**23.06.82 Bulletin 82/25**

(84) Designated Contracting States:
**AT BE CH DE FR GB IT LI LU NL SE**

(71) Applicant: McGrillen, Arthur Robert
9 Dundrum Road Dromara
County Down Northern Ireland(GB)

(72) Inventor: McGrillen, Arthur Robert
9 Dundrum Road Dromara
County Down Northern Ireland(GB)

(74) Representative: Wotherspoon, Graham
FITZPATRICKS 48 St. Vincent Street
Glasgow G2 5TT(GB)

(54) Device for use with a perambulator.

㊄ The device is to assist in lulling to sleep a baby carried in a pram. A device comprises a housing (10) to be attached to the perambulator. Rotatable means in the form of a wheel (14) is mounted in the housing (10) and is rotated therein by power means (18) to create vibratory movement which is transferred via the attachment means in the form of hooks (13) to the perambulator. The wheel (14) has weight means selectively provided therein or thereon to create an imbalance as the wheel is rotated. The wheel (14) also has means therein or thereon to create a humming noise during rotation thereof. The means can be spokes with gaps defined therebetween or if the wheel is a disc, can be apertures therein or vanes projecting outwardly therefrom.

Fig. 3.

EP 0 054 423 A1

# DEVICE FOR USE WITH A PERAMBULATOR

This invention relates to a device for use with a perambulator to assist in lulling to sleep a baby carried therein.

According to the present invention, there is provided a device for use with a perambulator to assist in lulling to sleep a baby carried therein, the device comprising a rotatable means mounted in a housing and being rotated therein to creat vibratory movement, power means to drive said rotatable means, and means to attach said housing to the perambulator thereby to transfer vibratory movement created in the housing to the perambulator.

Preferably, the power means is an electric motor mounted on but insulated from at least one wall of said housing.

Preferably also, means are provided to adjust the speed of the motor thereby to increase or decrease the rate of vibratory movement.

Preferably also, the rotatable means is a wheel, connected to the drive means by a drive belt and means are provided thereon to create a humming noise as the wheel is being rotated. The wheel may be spoked with the spokes and gaps therebetween creating the humming noise as the wheel is rotated; alternatively, the wheel may be a disc, having means therein or thereon to create the humming noise during rotation thereof. The means may be either a series of radial vanes projecting outwardly therefrom or a series of spaced apertures therein centred at similar radially spaced intervals from the wheel axis, the vanes or apertures creating the humming noise during rotation of the wheel.

Preferably also, the vibratory movement is caused by weight means provided selectively in or on the rotatable wheel to create an imbalance as the wheel is rotated.

Preferably further, the means to attach said housing to the perambulator comprises two hooks.

An embodiment of the present invention will now be described, by way of example, with reference to the accompanying drawings, in which:-

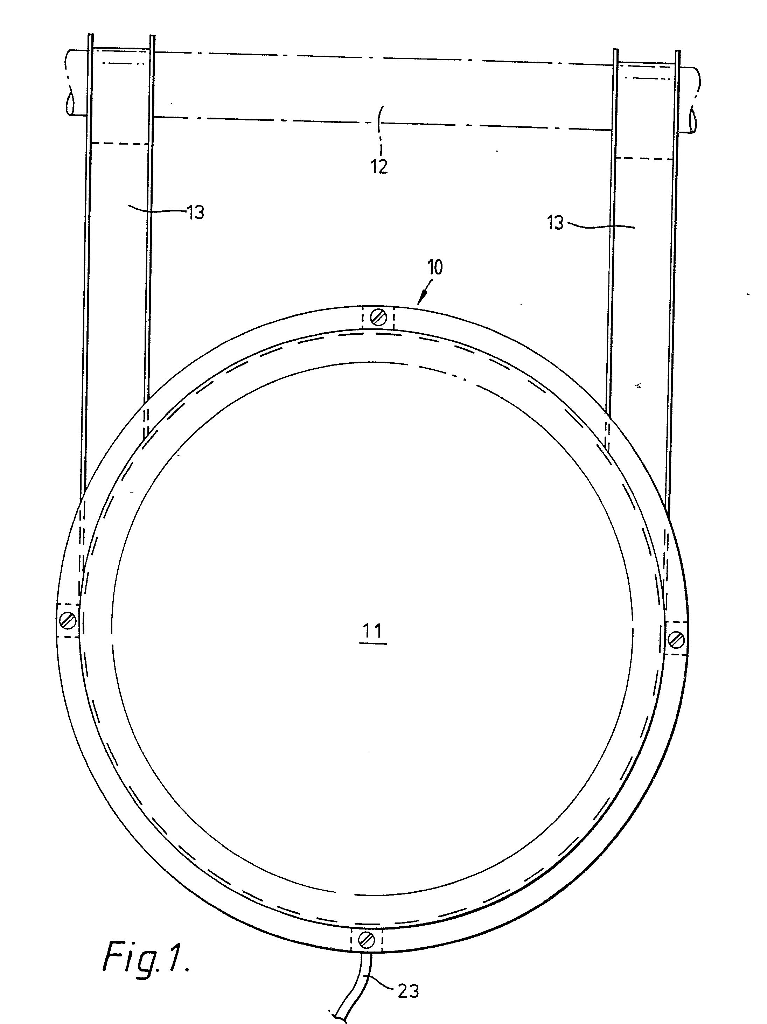

Fig. 1 is a front elevation of a device according to the present invention;

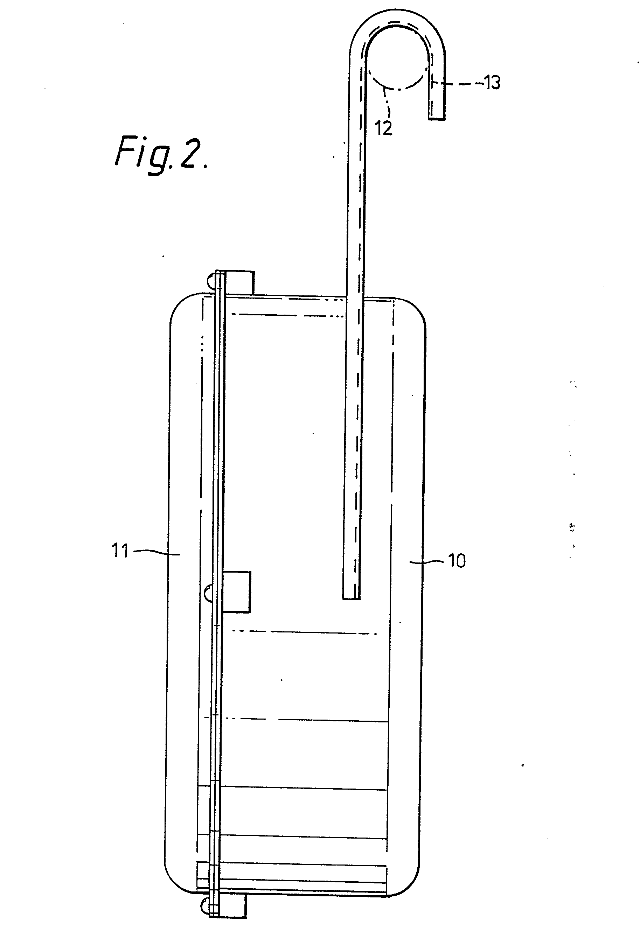

Fig. 2 is a side elevation;

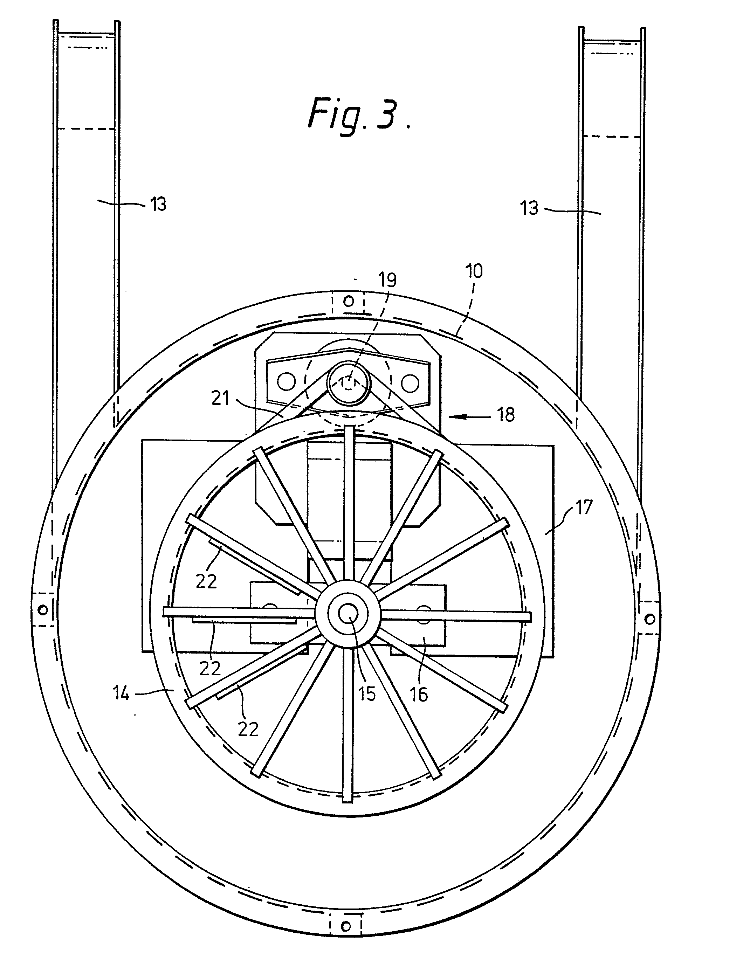

Fig. 3 is a front elevation of the device with the front part of a housing removed to reveal the internal aspect of the device; and

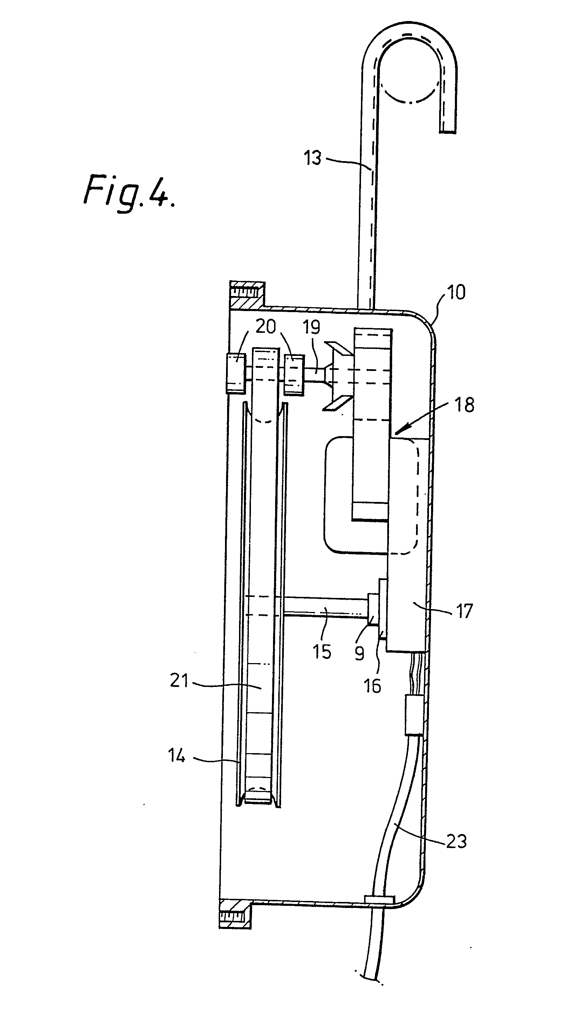

Fig. 4 is a side elevational view with the part of the housing removed to show the internal aspect of the device.

Referring to the drawings, a device for use with a perambulator to assist in lulling to sleep a baby carried therein comprises a housing 10 having a front cover 11 securable thereto. Means are provided to attach the housing to a handle 12 of a perambulator said means being in the form of two hooks 13 as shown. The hooks may each incorporate a flexible portion to assist in transferance of the movement.

Internally of the housing, a rotatable means in the form of a spoked wheel 14 is mounted on a shaft 15 for low friction rotatable movement. The shaft 15 is journalled in a bearing 9 carried by bracket 16 secured to a mounting 17 which also carries an electric motor 18 forming power means to drive said spoked wheel 14.

The outer end of the drive shaft 19 of the motor 18 carries two spaced collars 20 fast therewith and the drive shaft 19 is associated with the spoked wheel by a Vee-belt 21 entrained around the drive shaft 19 between the collar 20 and the spoked wheel 14.

Weight means 22 in the form of bars are secured to three of the spokes of said spoked wheel 14. The weight means creates an imbalance as the wheel is rotated and thus causes a desired vibratory movement of the housing. Means to create a humming noise during the rotation of the spoked wheel 14 comprises said spokes and gaps therebetween. In an alternative arrangement, the wheel is a disc either having a series of radial vanes projecting out therefrom with the vanes creating a humming noise when the disc is rotated, and three vanes being weighted to create the imbalance which causes the vibratory movement, or the wheel in the form of a disc can also have a series of spaced apertures thereon centred at similar radially spaced intervals from the wheel's axis for example three apertures are provided in one semi-circular half of the disc, and the other semi-circulator half of the discone aperture is provided with its centre diametrically opposite to that of the central aperture. A weight can be fitted in said one aperture to create the imbalance in an alternative modification of the latter, the one aperture can be omitted and the weight simply adhered to the disc in the same position.

Means (not shown) are provided to adjust the speed of the motor 18 comprising either a thyristor in circuit with an electrical feed line to the motor 18 and operable to give variable speeds by a manual switching device located outside the housing, or by a resistor to be switched into circuit by a manual switching device to give two speeds the resistor replaced by a svyaostat in circuit and controlled by a manual two-way switch. The feed line is a capab 23 passing through the housing and terminating in a plug insertable into a mains electricity supply socket: there being a transformer and rectifying and smoothing circuit in the plug to convert input a.c. current from the mains electricity to d.c. current.

With the device hooked on to the handle of a perambulator and power flowing to the motor 18, the wheel 14 is rotated creating a humming noise and vibratory movement which is transferred via the hooks 13 to the perambulator. The humming noise is soothing to the baby and the rocking movement of the perambulator lulls the baby to sleep. The speed adjustment to the motor can be used to give different settings if it is found that a slower or faster rate of vibratory movement is more conclusive in lulling a particular baby to sleep.

The housing may be of plastics material.

0054423

- 5 -

CLAIMS

1.      A device for use with a perambulator to assist in
lulling to sleep a baby carried therein, the device
comprising rotatable means mounted in a housing and
being rotated therein to create vibratory movement,
power means to drive said rotatable means, and means
to attach said housing to the perambulator thereby to
transfer vibratory movement created in the housing to
the perambulator.

2.      A device according to claim 1, wherein  the power
means is an electric motor mounted on but insulated
from at least one wall of said housing.

3.      A device according to claim 1 or 2, wherein means
are provided to adjust the speed of the motor thereby
to increase or decrease the rate of vibratory movement.

4.      A device according to claim 1, 2 or 3 wherein the
rotatable means is a wheel, connected to the drive means
by a drive belt and means are provided thereon to create
a humming noise as the wheel is being rotated.

5.      A device according to claim 4, wherein the wheel
is spoked with the spokes creating the humming noise
as the wheel is rotated.

6.      A device according to claim 4, wherein the wheel is
a disc having therein or thereon to create humming noise
during rotation thereof.

7.      A device according to claim 6, wherein the means
are a series of radial vanes projecting outwardly from the
disc.

8.      A device according to claim 6, wherein the means
are a series of spaced apertures on the disc centered at similar
radially  spaced intervals from the wheel's axis.

9. A device according to any one of claims 1 to 8, wherein the vibratory movement is caused by weight means provided selectively in or on the rotatable wheel to create an imbalance as the wheel is rotated.

10. A device according to any one of claims 1 to 9, wherein the means to attach said housing to the perambulator comprises two hooks.

1/4

12

13

13

10

11

*Fig.1.*

23

0054423

Fig.2.

# Fig. 3.

Fig.4.

0054423

European Patent Office

Application number

EP 81 30 5856

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | FR - A - 1 260 520 (BRANLY)<br><br>* page 1, right-hand column, line 1 - page 2, left-hand column, line 14; figures 1,2 *<br><br>--- | 1,2, 10 | B 62 B 9/00<br>A 47 D 9/04 |
| A | US - A - 2 951 479 (SELLNER)<br><br>* column 2, line 68 - column 3, line 68 *<br><br>--- | 2-5,9 | |
| A | FR - A - 1 430 188 (ORLIK)<br><br>* abstract points 2 and 3 *<br><br>--- | 1,3 | TECHNICAL FIELDS SEARCHED (Int.Cl.3)<br><br>B 62 B<br>A 47 D |
| A | DE - A - 2 552 206 (BAHLS)<br><br>* claims 1-3 *<br><br>--- | 1,3,4 | |
| A | US - A - 3 311 935 (PETTY)<br><br>* column 2, line 59 - column 3, line 16; figures 2-4 *<br><br>--- | 9 | |
| A | US - A - 3 261 033 (MARTIN)<br><br>--------- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document. but published on. or after the filing date
D: document cited in the application
L: document cited for other reasons

&: member of the same patent family, corresponding document

| X | The present search report has been drawn up for all claims | | |
|---|---|---|---|
| Place of search<br>The Hague | Date of completion of the search<br>18-03-1982 | Examiner<br>NADELHOFFER | |

EPO Form 1503.1   06.78